# EUROPÄISCHE PATENTSCHRIFT

(11) **EP 3 234 202 B1**
(45) Veröffentlichungstag und Bekanntmachung des Hinweises auf die Patenterteilung: **20.04.2022**
(21) Anmeldenummer: 15807627.3
(22) Anmeldetag: 04.12.2015
(51) Int. Cl.: C21D 1/673, B21D 22/02, B21D 22/20, B62D 21/15, B62D 29/00

(54) **PRESSGEHÄRTETES BLECHBAUTEIL MIT WENIGSTENS EINER SOLLBRUCHSTELLE, SOWIE BAUTEILVERBUND UND KRAFTFAHRZEUGKAROSSERIE MIT SOLCHEM BLECHBAUTEIL**
PRESS-HARDENED SHEET-METAL COMPONENT WITH AT LEAST ONE PREDETERMINED BREAKING POINT, AND COMPONENT ASSEMBLY AND MOTOR VEHICLE BODY WITH SUCH A SHEET-METAL COMPONENT
ÉLÉMENT STRUCTURAL EN TÔLE TREMPÉE SOUS PRESSE COMPRENANT AU MOINS UN POINT DE RUPTURE VOULU, AINSI QU'ENSEMBLE D'ÉLÉMENTS STRUCTURAUX ET CARROSSERIE DE VÉHICULE AUTOMOBILE POURVUS D'UN TEL ÉLÉMENT STRUCTURAL EN TÔLE

(30) Priorität: 19.12.2014 DE 102014226542
(43) Veröffentlichungstag der Anmeldung: 25.10.2017
(73) Patentinhaber: Bayerische Motoren Werke Aktiengesellschaft, 80809 München (DE)
(72) Erfinder: BECKER, Jürgen, 85084 Reichertshofen (DE); KUPETZ, Bernd, 85757 Karlsfeld (DE)
(86) Internationale Anmeldenummer: PCT/EP2015/078605
(87) Internationale Veröffentlichungsnummer: WO 2016/096470

(56) Entgegenhaltungen:
- EP-A1- 2 025 560
- WO-A1-2011/071433
- WO-A1-2012/016692
- DE-A1-102009 024 829
- DE-A1-102010 019 258
- US-A1- 2014 070 552

## Beschreibung

Die Erfindung betrifft ein Blechbauteil aus einem pressgehärteten Stahlblechmaterial bzw. ein pressgehärtetes Blechbauteil, wobei es sich insbesondere um ein Karosseriebauteil für ein Kraftfahrzeug handelt.

Die Erfindung betrifft ferner einen mehrere Bauteile umfassenden Bauteilverbund für eine Kraftfahrzeugkarosserie und auch eine Kraftfahrzeugkarosserie.

Unter einem pressgehärteten Blechbauteil wird ein aus pressgehärtetem Stahlblechmaterial gebildetes Blechformteil verstanden. Ein pressgehärtetes Blechbauteil ist also ein durch Presshärten bzw. Formhärten eines Stahlblechmaterials hergestelltes flächiges Bauteil. Zum Presshärten wird das Stahlblechmaterial auf Austenitisierungstemperatur erwärmt und anschließend in einem Presshärtewerkzeug geformt und hierbei gleichzeitig rasch abgekühlt, wodurch erhebliche Festigkeitssteigerungen erzielt werden (bspw. werden Zugfestigkeiten von bis zu 1300 MPa und mehr erreicht). Aus dem Stand der Technik sind verschiedene Verfahren zum Presshärten und entsprechende Vorrichtungen bekannt. Stellvertretend wird auf die sehr ausführlichen Erläuterungen in der DE 10 2011 053 698 B3 hingewiesen.

Die hohe Festigkeit pressgehärteter Blechbauteile ist jedoch verbunden mit einer relativ geringen Duktilität bzw. Bruchdehnung. Pressgehärtete Blechbauteile neigen daher dazu, bei einem Unfall bereits nach geringer Verformung zu brechen, weshalb die Menge an Kollisionsenergie, die bei einem Unfall oder dergleichen durch eine Verformung aufgenommen und abgebaut werden kann, eher gering ist. Fernen kann es bei unfallbedingten Verformungen zu unkontrollierten Brüchen kommen, was zur Entstehung von scharfen Kanten und/oder klaffenden Spalten führen und somit ein beträchtliches Verletzungsrisiko darstellen kann.

In der DE 20 2012 000 616 U1 wird ein Struktur- und/oder Karosseriebauteil für ein Kraftfahrzeug vorgeschlagen, welches durch Warmformen und Presshärten hergestellt ist, wobei dieses Bauteil nach dem Presshärten mindestens zwei Gefügebereiche unterschiedlicher Festigkeit und/oder unterschiedlicher Duktilität aufweist. Ein erster Bereich des Bauteils weist im Wesentlichen martensitisches Gefüge auf und ein gegenüber dem ersten Bereich mit geringerer Festigkeit und/oder höherer Duktilität versehener zweiter Bereich weist ein im Wesentlichen bainitisches Gefüge auf. Dadurch wird erreicht, dass das Bauteil bereichsweise für individuelle Belastungen, insbesondere Crashbelastungen, ausgelegt werden kann. Solche Bauteile sind allerdings aufwändig herzustellen und sind zuweilen extrem unwirtschaftlich.

Zum Stand der Technik wird ferner auch auf die DE 10 2012 024 626 A1, die eine Bainitisierung des pressgeformten Blechbauteils in einem Verzinkungsbad vorschlägt, und auf die DE 10 2012 201 267 A1, die ein sich an das Presshärten anschließende Anlassen pressgehärteter Bauteile vorschlägt, hingewiesen.

Die DE 10 2010 019 258 A1 betrifft ein Verfahren zur Herstellung von Stahlbändern unterschiedlicher Dicke und/oder Werkstoffgüte, die miteinander entlang eines durch Kanten der Stahlplatinen oder Stahlbänder gebildeten Fügestoßes verschweißt werden.

Aus der EP 2025560 A1 ist ein Verfahren bekannt, welches die Bereitstellung einer Platte aus Vergütungsstahl mit unterschiedlichen Wandstärken und Materialeigenschaften umfasst. Die Platte ist zu einer Stoßfängeranordnung umgeformt. Der Mittelteil wird beim Umformen der Platte geglüht. Die Platte wird zu einem Tailored Welded Blank verschweißt. Das Stahlblech ist so geformt, dass die Wandstärken und Materialeigenschaften im Mittelbereich von den Wandstärken und Materialeigenschaften im Anschlussbereich abweichen.

Die US 2014/070552 offenbart einen Stoßfänger für Fahrzeuge, der sich leicht herstellen lässt und hohe Energieabsorptionseigenschaften aufweist, wobei die Knickwahrscheinlichkeit des Verstärkungsträgers unterbunden wird.

Mit der Erfindung sollen Alternativen zu den aus dem Stand der Technik bekannten Maßnahme und Vorgehensweisen geschaffen werden.

Dies gelingt mit einem erfindungsgemäßen pressgehärteten Blechbauteil entsprechend den Merkmalen des Anspruchs 1 und mit einem erfindungsgemäßen Bauteilverbund entsprechend den Merkmalen des nebengeordneten Anspruchs. Mit einem weiteren nebengeordneten Anspruch erstreckt sich die Erfindung auch auf eine erfindungsgemäße Kraftfahrzeugkarosserie, die wenigstens ein erfindungsgemäßes Blechbauteil und/oder einen erfindungsgemäßen Bauteilverbund aufweist. Bevorzugte Weiterbildungen und Ausgestaltungen ergeben sich analog für alle Erfindungsgegenstände sowohl aus den jeweils abhängigen Ansprüchen als auch aus den nachfolgenden Erläuterungen.

Das erfindungsgemäße pressgehärtete Blechbauteil weist wenigstens einen überhärteten Bauteilbereich auf, der dazu vorgesehen ist, bei Crashbelastung als Sollbruchstelle zu fungieren.

Unter einem überhärteten Bauteilbereich wird ein Bereich bzw. Flächenabschnitt des Blechbauteils verstanden, in dem das Blechmaterial bezüglich der anderen Bereiche eine deutlich höhere Härte bzw. Festigkeit und eine wesentlich geringere Duktilität aufweist. Bevorzugt weist das Stahlblechmaterial in einem überhärteten Bauteilbereich ein im Wesentlichen reines martensitisches Gefüge oder ein Gefüge mit einem sehr hohen martensitischen Gefügeanteil auf, wohingegen außerhalb des überhärteten Bauteilbereichs ein Mischgefüge vorliegt, das neben martensitischen Gefügeanteilen z. B. auch bainitische und/oder ferritische Gefügeanteile aufweisen kann.

Das erfindungsgemäße Blechbauteil ist in einem überhärteten Bauteilbereich am sprödesten bzw. weist dort die geringste Duktilität auf. Bei Crashbelastungen und damit einhergehenden Crashverformungen reißt und/oder bricht das erfindungsgemäße pressgehärtete Blechbauteil zuerst in einem solchen überhärteten Bauteilbereich. Das erfindungsgemäße pressgehärtete Blechbauteil weist also wenigstens einen überhärteten Bauteilbereich auf, der eine definierte, d. h. positionsvorgegebene, Sollbruchstelle bildet bzw. darstellt.

Die Erfindung schlägt also eine neue Richtung ein, indem, anders als im Stand der Technik, nicht versucht wird durch Duktilitätserhöhung Reißer und/oder Brüche zu vermeiden, sondern gegensätzlich zur bisherigen Vorgehensweise durch gezielte lokale Duktilitätsverringerung (bzw. durch Versprödung mittels Überhärtung) Reißer und/oder Brüche an definierten Stellen zuzulassen. Dem Konstrukteur und/oder Entwickler stehen dadurch neue Möglichkeiten zur Gestaltung crashrelevanter Karosseriebauteile und auch übergeordneter Karosseriestrukturen zur Verfügung.

Ein überhärteter Bauteilbereich kann beim Presshärten bzw. während des Presshärtens erzeugt werden. Bspw. kann die Kühleinrichtung des verwendeten Presshärtewerkzeugs im betreffenden Abschnitt für eine lokal stärkere bzw. intensivere Kühlung ausgelegt sein. Ferner kann im betreffenden Werkzeugabschnitt die Flächenpressung lokal erhöht sein, um einen besseren Wärmeübergang zu erreichen. Für den betreffenden Werkzeugabschnitt können auch spezielle Werkzeugmaterialien eingesetzt werden, die eine gute Wärmeleitung ermöglichen.

Gegenüber den bislang im Stand der Technik beschriebenen Vorgehensweisen, die auf eine Duktilitätssteigerung abzielen, erfolgt quasi eine "umgekehrte Temperaturführung", die auf eine Duktilitätsverringerung abzielt. Der wenigstens eine überhärtete Bauteilbereich kann also direkt beim Presshärten des zuvor erwärmten Stahlblechmaterials erzeugt werden, so dass in vorteilhafter Weise kein zusätzlicher Arbeitsschritt, wie bspw. eine sich an das Presshärten anschließende Wärmebehandlung, erforderlich ist.

Bei dem Stahlblechmaterial handelt es sich insbesondere um einen Mangan-Bor-Stahl, wie bspw. 16MnB5, 20MnB5 oder 22MnB5. Die Blechstärke bzw. Blechdicke des Stahlblechmaterials liegt bevorzugt in einem Bereich von 0,5 mm bis 6,0 mm und insbesondere in einem Bereich von 0,8 mm bis 3,0 mm. Bevorzugt weist das erfindungsgemäße Blechbauteil eine im Wesentlichen homogene Blechdicke auf, wobei das erfindungsgemäße Blechbauteil durch Verwendung von so genannten Tailored Blanks auch eine inhomogene Blechdicke aufweisen kann.

Das Blechmaterial des erfindungsgemäßen Blechbauteils kann außerhalb eines überhärteten Bauteilbereichs eine im Wesentlichen homogene Festigkeit aufweisen, die insbesondere in einem Festigkeitsbereich von 1300 MPa bis 1500 MPa liegt.

Außerhalb eines überhärteten Bauteilbereichs kann das Blechmaterial auch unterschiedliche Festigkeiten aufweisen. Damit ist gemeint, dass das erfindungsgemäße Blechbauteil, wie in der DE 20 2012 000 616 U1 beschrieben, wenigstens einen ersten Bauteilbereich und wenigstens einen zweiten Bautelbereich mit unterschiedlicher Festigkeit und/oder unterschiedlicher Duktilität aufweist (wobei auch wenigstens ein ungehärteter oder nur gering gehärteter Bereich vorgesehen sein kann), sowie auch wenigstens einen dritten überhärteten Bauteilbereich. Ein erster Bereich kann bspw. eine Festigkeit von 300 MPa bis 500 MPa und ein zweiter Bereich kann bspw. eine Festigkeit von 1300 MPa bis 1500 MPa aufweisen. Ein duktiler erster Bereich verfügt bei Crashbelastung über ein gutes Deformationsverhalten, wohingegen ein überhärteter dritter Bereiche als Sollbruchstelle fungiert. Das erfindungsgemäße Blechbauteil kann derart ausgebildet sein, dass bei Crashbelastung zunächst duktile Bereiche verformt werden und zeitversetzt in wenigstens einem überhärteten Bereich ein Riss und/oder Bruch entsteht.

In einem überhärteten Bauteilbereich kann das Blechmaterial eine Festigkeit aufweisen, die um mindestens 100 MPa, bevorzugt um mindestens 200 MPa, besonders bevorzugt um mindestens 300 MPa und insbesondere um mindestens 400 MPa über der höchsten Blech- bzw. Material-Festigkeit außerhalb des überhärteten Bauteilbereichs liegt. Die Festigkeit in einem überhärteten Bauteilbereich kann bspw. mindestens 1600 MPa, bevorzugt mindestens 1700 MPa, besonders bevorzugt mindestens 1800 MPa und insbesondere mindestens 1900 MPa betragen. Die Festigkeit in einem überhärteten Bauteilbereich kann auch bis zu 2000 MPa und mehr betragen. Bevorzugt ist die hohe Festigkeit in einem überhärteten Bauteilbereich homogen ausgebildet.

Ein überhärteter Bauteilbereich kann sich von einer Außenkante des Blechbauteils zu wenigstens einer anderen Außenkante des Blechbauteils erstrecken. Bevorzugt erstreckt sich ein überhärteter Bauteilbereich bandartig zwischen zwei Außenkanten des Blechbauteils. Bei einer Crashbelastung entsteht an der durch die Überhärtung des Blechmaterials gebildeten Sollbruchstelle zwischen den betreffenden Außenkanten ein Riss- und/oder Bruch, wobei es gegebenenfalls zu einer vollständigen Durchtrennung kommen kann. Ein Durchbrechen und/oder Durchreißen ist jedoch nicht zwingend vorgesehen.

Bei dem erfindungsgemäßen pressgehärteten Blechbauteil handelt es sich insbesondere um ein Karosseriebauteil für ein Kraftfahrzeug, wie bspw. einen Querträger, einen Dachspriegel, einen Seitenschweller, einen Längsträger, eine A- oder B-Säule, einen Motorträger oder dergleichen. Besonders bevorzugt handelt es sich um ein Verstärkungs- bzw. Versteifungsteil für eine Kraftfahrzeugkarosserie, wie bspw. eine Seitenschwellerverstärkung, eine Längsträgerverstärkung, eine Säulenverstärkung, eine Tunnelverstärkung oder dergleichen. Bei dem erfindungsgemäßen pressgehärteten Blechbauteil kann es sich aber auch um ein Fahrwerksbauteil handeln.

Der erfindungsgemäße Bauteilverbund weist wenigstens ein erfindungsgemäßes pressgehärtetes Blechbauteil auf, das bei Crashbelastungen in wenigstens einem überhärteten Bauteilbereich reißen und/oder brechen kann, um dadurch Kollisionsenergie gezielt in andere Bauteile und insbesondere in benachbarte Bauteile des Bauteilverbunds umzuleiten bzw. umzulenken. Bevorzugt ist vorgesehen, dass wenigstens ein anderes und insbesondere benachbartes Bauteil als Energieabsorptionselement ausgebildet ist, das Kollisionsenergie durch definierte Verformung (d. h. durch Verformung mit vorgegebenen Verformungsmöglichkeiten) aufnehmen und abbauen kann.

Bei einem Unfall wird Crashenergie (Aufprallenergie) also gezielt umgelenkt und bspw. von Fahrzeuginsassen weggelenkt, was durch das Reißen und/oder Brechen eines erfindungsgemäßen pressgehärteten Blechbauteils an wenigstens einer durch Überhärtung vorgegebenen Sollbruchstelle ermöglicht wird. Im Stand der Technik wird hingegen versucht, ein solches Reißen und/oder Brechen zu vermeiden und/oder Kollisionsenergie durch ermöglichte Verformung des pressgehärteten Blechbauteils abzubauen.

Ein erfindungsgemäßer Bauteilverbund ist bspw. ein aus mehreren Bauteilen gebildetes Zusammenbauteil (bspw. ein als Zusammenbauteil ausgebildetes Karosseriebauteil) für eine Kraftfahrzeugkarosserie, wie z. B. in der DE 10 2013 007 805 A1 beschrieben. Ein erfindungsgemäßer Bauteilverbund kann aber auch Bestandteil einer Kraftfahrzeugkarosserie bzw. ein baulich integrierter Karosseriestrukturbereich sein. So oder so umfasst ein erfindungsgemäßer Bauteilverbund weitere Bauteile, die in geeigneter Weise mit dem erfindungsgemäßen pressgehärteten Blechbauteil gefügt sind, wobei es sich z. B. um Gussteile, Blechteile oder Blechformteile (insbesondere auch mit unterschiedlichen Festigkeiten), Profilteile, Kunststoff- oder Kunststoffverbundteile (bspw. CFK-Teile, GFK-Teile) und/oder dergleichen handeln kann. Jedes dieser Bauteile kann als Energieabsorptionselement ausgebildet sein.

Die Erfindung wird nachfolgend anhand der Zeichnung näher erläutert.
- Fig. 1: zeigt in einer perspektivischen Darstellung den Vorderbau einer Kraftfahrzeugkarosserie.
- Fig. 2: zeigt, ebenfalls in einer perspektivischen Darstellung, den vorderen Querträger des Vorderbaus aus Fig. 1.

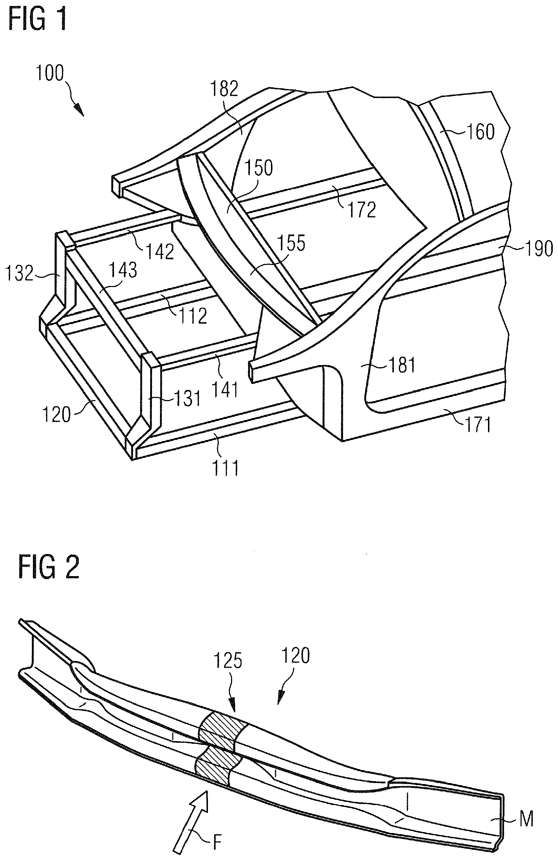

Der in Fig. 1 schematisch und ohne konstruktive Details gezeigte Vorderbau 100 einer PKW-Kraftfahrzeugkarosserie weist zwei Längsträger 111 und 112 auf, die an ihren vorderen Enden durch einen vorderen Querträger 120 verbunden sind. Bei den Längsträgern 111/112 und dem vorderen Querträger 120 handelt es sich um besonders crashrelevante bzw. crashfunktionale Karosseriebauteile. Der Vorderbau 100 umfasst ferner zwei ebenfalls mit dem vorderen Querträger 120 verbundene Stützträger 131 und 132, sowie mehrere obere Trägerelemente 141, 142 und 143.

In dem gezeigten Beispiel bilden der vordere Querträger 120, die vorderen Enden bzw. Abschnitte der Längsträger 111/112 und die beiden Stützträger 131/132 einen Karosseriestrukturbereich, wobei es sich im Sinne der Erfindung um einen Bauteilverbund handelt, dem ergänzend auch weitere Komponenten, wie bspw. die Trägerelemente 141/142/143, zugerechnet werden können.

Zum gezeigten Ausschnitt der Kraftfahrzeugkarosserie gehören ferner eine Stirnwand 150 mit einem oberen Stirnwand-Querträger bzw. Windschutzscheiben-Querträger 155, mehrere Dachspriegel 160, zwei Seitenschweller 171 und 172, zwei A-Säulen 181 und 182 und ein Tunnel 190.

Fig. 2 zeigt einen als pressgehärtetes Blechformteil ausgebildeten vorderen Querträger 120, der gemäß Fig. 1 an seinen beiden Enden mit den Längsträgern 111/112 und Stützträgern 131/132 verbunden ist. Dieser vordere Querträger 120 weist einen überhärteten Bauteilbereich bzw. eine überhärtete Zone 125 auf, in dem bzw. in der das Stahlblechmaterial M aufgrund einer beim Presshärten erfolgten Überhärtung über eine nur sehr niedrige Duktilität verfügt, so dass es an dieser Stelle bei einer Crashbelastung (wie beispielhaft mit dem Pfeil F veranschaulicht) zu einer Riss- und/oder Bruchentstehung kommt. Der überhärtete Bauteilbereich 125 erstreckt sich zwischen den gegenüberliegenden Längskanten in einem zusammenhängenden Flächenstück (bzw. Flächenabschnitt), innerhalb dem das Blechmaterial M eine sehr hohe und im Wesentlichen homogene Festigkeit aufweist. In analoger Weise kann der Querträger 120 mehrere überhärtete Bauteilbereiche aufweisen.

Das Bauteilversagen an der durch Überhärtung vorgegebenen Stelle ist beabsichtigt. Dadurch wird die auftretende Kollisionsenergie gezielt in die benachbarten Längsträger 111/112 und Stützträger 131/132 umgelenkt und von diesen weitergeleitet, bspw. in die Trägerelemente 141/142/143, und/oder kann von diesen durch Verformung aufgenommen und abgebaut werden.

Die Längsträger 111/112 und Stützträger 131/132 können quasi als Energieabsorptionselemente fungieren und sind bevorzugt entsprechend ausgebildet, so dass eine definierte Verformung (d. h. Verformung mit vorgegebenen Verformungsmöglichkeiten) ermöglicht wird. Auch die Trägerelemente 141/142/143 können als Energieabsorptionselemente fungieren und entsprechend ausgebildet sein.

In analoger Weise können auch andere pressgehärtete Karosseriebauteile, wie bspw. die Stirnwandverstärkung bzw. der Stirnwand-Querträger 155, mit überhärteten Bereichen bzw. Zonen ausgebildet sein, die in der beschriebenen Weise Sollbruchstellen darstellen.

### Bezugszeichenliste

- 100: Vorderbau (Kraftfahrzeugkarosserie)
- 111: Längsträger
- 112: Längsträger
- 120: Querträger
- 125: Überhärteter Bereich, Sollbruchstelle
- 131: Stützträger
- 132: Stützträger
- 141: Trägerelement
- 142: Trägerelement
- 143: Trägerelement
- 150: Stirnwand
- 155: Stirnwand-Querträger
- 160: Dachspriegel
- 171: Seitenschweller
- 172: Seitenschweller
- 181: A-Säule
- 182: A-Säule
- 190: Tunnel
- F: Crashbelastung
- M: Stahlblechmaterial

## Patentansprüche

1. Karosseriebauteil (120) für ein Kraftfahrzeug aus einem pressgehärteten Stahlblechmaterial (M), welches wenigstens einen überhärteten Bauteilbereich (125) aufweist, der dazu vorgesehen ist, bei einer Crashbelastung (F) als Sollbruchstelle zu fungieren, wobei das Stahlblechmaterial (M) im überhärteten Bauteilbereich (125) eine hohe Festigkeit aufweist, die um mindestens 100 MPa über der höchsten Festigkeit außerhalb dieses überhärteten Bauteilbereichs (125) liegt,
**dadurch gekennzeichnet, dass**
der überhärtete Bauteilbereich (125) ein Flächenabschnitt ist, der sich von einer Außenkante des Karosseriebauteils (120) zu wenigstens einer anderen Außenkante des Karosseriebauteils (120) erstreckt und in dem die hohe Festigkeit homogen ausgebildet ist.

2. Karosseriebauteil (120) nach Anspruch 1,
**dadurch gekennzeichnet, dass**
das Blechmaterial (M) außerhalb des überhärteten Bauteilbereichs (125) eine im Wesentlichen homogene Festigkeit aufweist, die insbesondere in einem Bereich von 1300 MPa bis 1500 MPa liegt.

3. Karosseriebauteil (120) nach Anspruch 1,
**dadurch gekennzeichnet, dass**
das Blechmaterial (M) außerhalb des überhärteten Bauteilbereichs (125) unterschiedliche Festigkeiten aufweist.

4. Karosseriebauteil (120) nach einem der vorausgehenden Ansprüche,
**dadurch gekennzeichnet, dass**
das Blechmaterial (M) im überhärteten Bauteilbereich (125) eine Festigkeit aufweist, die um mindestens 200 MPa, bevorzugt um mindestens 300 MPa und insbesondere um mindestens 400 MPa über der höchsten Festigkeit außerhalb des überhärteten Bauteilbereichs (125) liegt.

5. Karosseriebauteil (120) nach einem der vorausgehenden Ansprüche,
**dadurch gekennzeichnet, dass**
das Blechmaterial (M) im überhärteten Bauteilbereich (125) eine Festigkeit von mindestens 1600 MPa, bevorzugt mindestens 1700 MPa, besonders bevorzugt mindestens 1800 MPa und insbesondere mindestens 1900 MPa aufweist.

6. Karosseriebauteil (120) nach einem der vorausgehenden Ansprüche,
**dadurch gekennzeichnet, dass**
dieses eine im Wesentlichen homogene Blechdicke aufweist.

7. Bauteilverbund für eine Kraftfahrzeugkarosserie (100), umfassend wenigstens ein pressgehärtetes Karosseriebauteil (120) nach einem der vorausgehenden Ansprüche, wobei dieses pressgehärtete Karosseriebauteil (120) bei Crashbelastungen (F) in dem überhärteten Bauteilbereich (125) reißen und/oder brechen kann, um dadurch Kollisionsenergie gezielt in benachbarte Bauteile des Bauteilverbunds (111/112, 131/132, 141/142/143) umzulenken.

8. Bauteilverbund nach Anspruch 7,
**umfassend**
weitere mit dem pressgehärteten Karosseriebauteil (120) gefügte Bauteile (111/112, 131/132), wobei es sich um Gussteile, Blechformteile, Profilteile und/oder Kunststoffverbundteile handeln kann.

9. Kraftfahrzeugkarosserie (100), insbesondere für einen Personenkraftwagen, umfassend wenigstens ein pressgehärtetes Karosseriebauteil (120) und/oder wenigstens einen Bauteilverbund gemäß einem der vorausgehenden Ansprüche.

## Claims

1. Bodywork component (120) for a motor vehicle made of a press-hardened sheet steel material (M), which bodywork component has at least one super-hardened component region (125), which is intended to act as a predetermined breaking point in the event of crash-induced loading (F), wherein the sheet steel material (M) in the super-hardened component region (125) has a high strength which is at least 100 MPa greater than the highest strength outside of this super-hardened component region (125),
**characterized in that**
the super-hardened component region (125) is a surface portion which extends from one outer edge of the bodywork component (120) to at least one other outer edge of the bodywork component (120) and in which the high strength is homogenous.

2. Bodywork component (120) according to Claim 1,
**characterized in that**
the sheet-metal material (M) outside of the super-hardened component region (125) has a substantially homogenous strength, which is in particular in a range of from 1300 MPa to 1500 MPa.

3. Bodywork component (120) according to Claim 1,
**characterized in that**
the sheet-metal material (M) outside of the super-hardened component region (125) has different strengths.

4. Bodywork component (120) according to one of the preceding claims,
**characterized in that**
the sheet-metal material (M) in the super-hardened component region (125) has a strength which is at least 200 MPa, preferably at least 300 MPa and in particular at least 400 MPa greater than the highest strength outside of the super-hardened component region (125).

5. Bodywork component (120) according to one of the preceding claims,
**characterized in that**
the sheet-metal material (M) in the super-hardened component region (125) has a strength of at least 1600 MPa, preferably at least 1700 MPa, particularly preferably at least 1800 MPa and in particular at least 1900 MPa.

6. Bodywork component (120) according to one of the preceding claims,
**characterized in that**
it has a substantially homogenous sheet-metal thickness.

7. Component composite for a motor vehicle bodywork (100), comprising at least one press-hardened bodywork component (120) according to one of the preceding claims, wherein this press-hardened bodywork component (120) can tear and/or break in the event of crash-induced loading (F) in the super-hardened component region (125), in order as a result to deflect collision energy targetedly into adjacent components of the component composite (111/112, 131/132, 141/142/143).

8. Component composite according to Claim 7,
**comprising**
further components (111/112, 131/132) joined to the press-hardened bodywork component (120), wherein said components may be cast parts, shaped sheet-metal parts, profile parts and/or plastics composite parts.

9. Motor vehicle bodywork (100), in particular for a passenger car, comprising at least one press-hardened bodywork component (120) and/or at least one component composite according to one of the preceding claims.

## Revendications

1. Composant de carrosserie (120) pour un véhicule automobile, en un matériau en tôle d'acier trempé sous pression (M), qui présente au moins une zone de composant surtrempée (125), qui est prévue pour servir de point destiné à la rupture en cas de sollicitation de collision (F), le matériau en tôle d'acier (M) présentant dans la zone de composant surtrempée (125) une résistance élevée, qui se situe au moins 100 MPa au-dessus de la résistance la plus élevée en dehors de cette zone de composant surtrempée (125),
**caractérisé en ce que**
la zone de composant surtrempée (125) est une section de surface qui s'étend d'un bord extérieur du composant de carrosserie (120) à au moins un autre bord extérieur du composant de carrosserie (120) et dans laquelle la résistance élevée est configurée sous forme homogène.

2. Composant de carrosserie (120) selon la revendication 1, **caractérisé en ce que** le matériau en tôle (M) présente, en dehors de la zone de composant surtrempée (125), une résistance essentiellement homogène, qui se situe notamment dans une plage allant de 1 300 MPa à 1 500 MPa.

3. Composant de carrosserie (120) selon la revendication 1, **caractérisé en ce que** le matériau en tôle (M) présente des résistances différentes en dehors de la zone de composant surtrempée (125).

4. Composant de carrosserie (120) selon l'une quelconque des revendications précédentes, **caractérisé en ce que** le matériau en tôle (M) présente dans la zone de composant surtrempée (125) une résistance qui se situe au moins 200 MPa, de préférence au moins 300 MPa et notamment au moins 400 MPa au-dessus de la résistance la plus élevée en dehors de la zone de composant surtrempée (125).

5. Composant de carrosserie (120) selon l'une quelconque des revendications précédentes, **caractérisé en ce que** le matériau en tôle (M) présente dans la zone de composant surtrempée (125) une résistance d'au moins 1 600 MPa, de préférence d'au moins 1 700 MPa, de manière particulièrement préférée d'au moins 1 800 MPa et notamment d'au moins 1 900 MPa.

6. Composant de carrosserie (120) selon l'une quelconque des revendications précédentes, **caractérisé en ce que** celui-ci présente une épaisseur de tôle essentiellement homogène.

7. Ensemble de composants pour une carrosserie de véhicule automobile (100), comprenant au moins un composant de carrosserie trempé sous pression (120) selon l'une quelconque des revendications précédentes, ce composant de carrosserie trempé sous pression (120) pouvant se fissurer et/ou se rompre dans la zone de composant surtrempée (125) en cas de sollicitations de collision (F), afin de rediriger ainsi de manière ciblée l'énergie de collision vers des composants voisins de l'ensemble de composants (111/112, 131/132, 141/142/143) .

8. Ensemble de composants selon la revendication 7, **comprenant**
d'autres composants (111/112, 131/132) assemblés au composant de carrosserie trempé sous pression (120), ceux-ci pouvant consister en des pièces moulées, des pièces façonnées en tôle, des pièces profilées et/ou des pièces composites en matière plastique.

9. Carrosserie de véhicule automobile (100), notamment pour une voiture particulière, comprenant au moins un composant de carrosserie trempé sous pression (120) et/ou au moins un ensemble de composants selon l'une quelconque des revendications précédentes.
